# EUROPÄISCHE PATENTSCHRIFT

(11) **EP 2 685 576 B1**
(45) Veröffentlichungstag und Bekanntmachung des Hinweises auf die Patenterteilung: **27.04.2016**
(21) Anmeldenummer: 13174931.9
(22) Anmeldetag: 03.07.2013
(51) Int. Cl.: H02G 3/06, H02G 3/04

(54) **Kabelrinnesegment**
Cable channel segment
Segment de conduit de câbles

(30) Priorität: 10.07.2012 DE 202012102542 U
(43) Veröffentlichungstag der Anmeldung: 15.01.2014
(73) Patentinhaber: OBO Bettermann GmbH & Co. KG, 58710 Menden (DE)
(72) Erfinder: Knosalla, Robert, 58640 Iserlohn (DE); Grosse Gehling, Andreas, 58710 Menden (DE)
(74) Vertreter: Haverkamp, Jens

(56) Entgegenhaltungen:
- EP-A1- 0 578 459
- DE-U1-202006 019 238
- FR-A- 1 471 497

## Beschreibung

Die Erfindung betrifft ein Kabelrinnensegment mit einem durch zwei Seitenholme und einen die Seitenholme verbindenden Boden gebildeten Kanal welches Kabelrinnensegment über zwei, an einem der beiden Seitenholme durch zumindest eine Scharnierstelle miteinander verbundene Rinnenteile verfügt, welche Rinnenteile um die durch eine solche Scharnierstelle bereitgestellte Schwenkachse gegeneinander verstellbar sind.

Kabelrinnensegmente werden verwendet, um aus einer Vielzahl derartiger Elemente ein dauerhaftes Kabeltrag- bzw. Kabelführungssystem zu erstellen. Insofern bildet jedes Kabelrinnensegment einen Abschnitt eines solchen Kabeltrag- bzw. Kabelführungssystems. Zum Verbinden zweier Kabelrinnensegmente werden diese gemäß einer Ausgestaltung überlappend zueinander angeordnet. Typischerweise ist zu diesem Zweck der eine Endabschnitt eines solchen Kabelrinnensegmentes zur Ausbildung einer Muffe verkröpft, um darin den unverkröpften Endabschnitt eines weiteren Kabelrinnensegmentes aufzunehmen. Verbunden werden zwei Kabelrinnensegmente entweder durch Schrauben oder durch Vorsehen komplementärer Verbindungselemente, zugeordnet den jeweils miteinander in Eingriff zu stellenden Verbindungsabschnitten zweier Kabelrinnensegmente. Bei einer solchen Ausgestaltung ist eine werkzeug- und schraubenlose Verbindung möglich. Damit Kabeltrag- bzw. Kabelführungssystem unterschiedlichster Konfiguration erstellbar sind, wird für jede unterschiedliche Kanal-Querschnittsgröße (Nutzbreite bzw. Nutzhöhe) eine Vielzahl verschiedener Kabelrinnensegmente bereitgestellt. Diese unterscheiden sich hinsichtlich ihrer Kanalausbildung. So werden gerade und gebogene Segmente auch in unterschiedlicher Länge, Winkelsegmente, Kreuzungen, Abzweigungen und dergleichen bereitgestellt. Wenn Abschnitte eines Kabeltragsystems winklig aneinander grenzen, werden Winkelsegmente benötigt. Je nach den baulichen Gegebenheiten und der vorgesehenen Trassenführung für die Errichtung des Kabeltragsystems müssen Winkelsegmente mit unterschiedlichen Winkeln bereitgestellt werden. Üblich sind Kabelrinnenwinkelsegmente mit Winkeln von 30°, 45°, 60° und 90°. Auch wenn Winkelsegmente mit unterschiedlichen Winkelausführungen zur Verfügung stehen, bedarf es jedoch eines nicht unerheblichen Herstellungs- und vor allem Lageraufwandes, sämtliche unterschiedliche Segmente bevorratet zu halten. Trotz vorgegebener Winkelsegmente ist es mitunter auch erforderlich, diese vor Ort bei der Errichtung eines Kabeltragsystems durch Zuschneiden passend zu machen.

Ein bezüglich seines Winkels einrichtbares Kabelrinnensegment gemäß dem Oberbegriff des Anspruchs 1 ist aus EP 0 578 459 A1 bekannt. Dieses Kabelrinnensegment ist einstückig aus einer Platine hergestellt. Zwischen den beiden mit Abstand voneinander angeordneten Rinnenteilen, die entlang eines Seitenholms durch zumindest eine Scharnierstelle miteinander verbunden sind, befindet sich ein Bodenteil mit einem daran angeformten Randstück. Das Bodenteil ist von den angrenzenden Bodenteilen der Rinnenteile durch einen Spalt getrennt. Damit dieses Bodenteil den Abstand zwischen den Bodenteilen der Rinnenteile überbrücken kann, müssen diese winklig zueinander angeordnet sein. Das der bzw. den Scharnierstellen gegenüberliegende Randstück verfügt über Verlängerungszungen, die an den Seitenholmen der beiden winklig aneinander grenzenden Rinnenteile anzuschließen sind. Nachteilig ist bei diesem vorbekannten Kabelrinnensegment, dass sich dieses Kabelrinnensegment nicht zur Ausbildung kleinerer Winkelsegmente oder zur Verwendung als gerades Rinnensegment eignet.

DE 20 2006 019 238 U1 beschreibt ein als Deckel ausgebildetes Verbindungsstück zwischen zwei Kabelkanälen.

FR 1 471 497 beschreibt, wie eine winklige Anordnung zweier Kabelrinnenteile vorgenommen werden kann. Hierfür müssen die Rinnenteile eine besondere Endausbildung aufweisen, damit diese winklig an entsprechend konzipierte Anschlussenden einer zweiten Kabelrinne durch Schrauben angeschlossen werden können.

Vor dem vorstehend geschilderten Hintergrund liegt der Erfindung daher die Aufgabe zugrunde, ein Kabelrinnensegment vorzuschlagen, welches sich nicht nur als universelles einrichtbares Winkelsegment verwenden lässt, sondern welches sich insbesondere auch zur Ausbildung eines geraden Segmentes eignet und in der Handhabung vereinfacht ist.

Gelöst wird diese Aufgabe erfindungsgemäß durch ein eingangs genanntes, gattungsgemäßes Kabelrinnensegment, bei dem das Kabelrinnensegment über einen daran benachbart zu einer Scharnierstelle angeschlossenen Einsatz mit einem den zwischen den Böden der Rinnenteile befindlichen Spalt überbrückenden Bodenteil verfügt, welches Bodenteil an seinem der zumindest einen Scharnierstelle gegenüberliegenden Rand eine den zwischen den der zumindest einen Scharnierstelle gegenüberliegenden Seitenholmen der Rinnenteile befindlichen Spalt überbrückende Kanalrandleiste trägt.

Dieses Kabelrinnensegment umfasst zwei Rinnenteile, die über ein oder mehrere Scharnierstellen in einem der beiden Seitenholme miteinander verbunden sind. Über die zumindest eine Scharnierstelle, durch die eine orthogonal zur Ebene des Bodens des Kabelrinnensegmentes verlaufende Schwenkachse gebildet ist, sind die beiden Rinnenteile gegeneinander verschwenkbar. Aufgrund der vorgesehenen Anordnung der Schwenkachse können somit die beiden Rinnenteile um die Schanierstelle zur Ausbildung von Winkelsegmenten, deren Winkel eingerichtet und so an die Situation vor Ort angepasst werden, verschwenkt werden. Die Schanierstelle wird gemäß einem bevorzugten Ausführungsbeispiel durch eine Materialreduzierung in der Achse der Schwenkachse innerhalb des Seitenholmes bereitgestellt. Eine solche Materialreduzierung kann durch eine Verjüngung der Materialstärke hervorgerufen sein, so dass die Scharnierstelle nach Art eines Filmscharniers ausgebildet ist. Gemäß einer anderen Ausgestaltung ist vorgesehen, die Schwenkachse der Scharnierstelle durch mehrere in einer Reihe hintereinander liegende Durchbrechungen in dem Seitenholm auszubilden. Die Scharnierstelle kann prinzipiell auch durch ein gelenkiges Scharnier bereitgestellt werden. In aller Regel wird dieses jedoch nicht erforderlich sein, da eine Verstellung der Rinnenteile zueinander zur Ausbildung eines Winkelrinnensegmentes nur einmal vorgenommen werden wird.

Das auf diese Weise einrichtbare Kabelrinnensegment verfügt des Weiteren über einen Einsatz. Der Einsatz ist an das Kabelrinnensegment angeschlossen und verfügt über ein Bodenteil. Das Bodenteil überbrückt den zwischen den beiden Böden der Rinnenteile befindlichen Spalt. Bevorzugt befindet sich das Bodenteil auf der Oberseite der Böden der beiden Rinnenteile aufliegend und weist eine Erstreckung auf, damit der zwischen den Rinnenteilen befindliche Bodenspalt in jeder bestimmungsgemäßen Stellung der beiden Rinnenteile zueinander überbrückt ist. Der Einsatz verfügt neben dem Bodenteil über eine Kanalrandleiste. Die Kanalrandleiste befindet sich an derjenigen Seite des Bodenteils, die der wenigstens einen Scharnierstelle gegenüberliegt. Die Kanalrandleiste überbrückt den zwischen den der zumindest einen Scharnierstelle gegenüberliegenden Seitenholmen der Rinnenteile befindlichen Spalt und bildet somit eine randliche Begrenzung des Kanals, vor allem dann, wenn die Rinnenteile gegeneinander um die Schwenkachse der Scharnierstelle aus ihrer fluchtenden Anordnung heraus verstellt worden sind. Die Kanalrandleiste weist vorzugsweise eine Länge auf, damit durch diese der Seitenholmspalt zwischen den beiden Rinnenteilen in jeder bestimmungsgemäßen Stellung der beiden Rinnenteile zueinander überbrückt ist. Vorzugsweise befindet sich die Kanalrandleiste innenseitig bezüglich der benachbarten Seitenholme der Rinnenteile und liegt an diesen an. Zum Festlegen der Kanalrandleiste an den Seitenholmen der Rinnenteile weisen diese miteinander fluchtende Durchbrechungen auf. Mittels zumindest eines Befestigers, der zwei miteinander fluchtend angeordnete Durchbrechungen durchgreift, wird die Kanalrandleiste an dem Seitenholm festgelegt. Typischerweise ist die Durchbrechung innerhalb der Kanalrandleiste und/oder diejenige des benachbarten Seitenholms als der Längserstreckung des Kabelrinnensegmentes folgende Langlochöffnung ausgeführt. Dann ist eine Verstellung der beiden Rinnenteile gegeneinander zum Einrichten des gewünschten Winkels mit eingesetztem, jedoch noch nicht vollständig gespanntem Befestiger möglich. Die Länge der Kanalrandleiste ist typischerweise größer als die maximale Seitenholmspaltweite zwischen den beiden Rinnenteilen. Dann ist gewährleistet, dass in jeder Stellung die Kanalrandleiste an jeweils einem Seitenholm eines Rinnenteils festgelegt werden kann.

Zur Führung einer solchen Kanalrandleiste ist bei einer Ausgestaltung der Erfindung vorgesehen, die benachbart zu der Kanalrandleiste befindlichen Seitenholme der beiden Rinnenteile nach innen vorspringend zu verkröpfen, so dass auf diese Weise eine Kanalrandleistenaufnahme geschaffen ist. Die Höhe der Kanalrandleistenaufnahme erstreckt sich vom Boden eines Rinnenteils bis zu der nach innen vorspringenden Verkröpfung, wobei die Höhe der Kanalrandleiste entspricht bzw. mit dem notwendigen Spiel größer bemessen ist als die Höhe der Kanalrandleiste. Bei einer solchen Ausgestaltung können durch das Eingreifen der Kanalrandleiste in die Kanalrandleistenaufnahme der Seitenholme Knickbelastungen besonders effektiv aufgefangen werden, wenn die Kanalrandleiste an den jeweiligen Seitenholm des benachbarten Innenteils angeschlossen ist. Prinzipiell ist es ebenfalls möglich, das typischerweise den oberen Abschluss eines Seitenholmes bildende Auge für die Zwecke einer Führung der Kanalrandleiste zu verwenden. Die Höhe der Kanalrandleiste entspricht dann dem Abstand zwischen dem Boden eines Rinnenteils bis zum Innenscheitel des Auges.

Ebenso wie die Kanalrandleiste verfügt auch das Bodenteil des Einsatzes vorzugsweise über Durchbrechungen, damit auch das Bodenteil mit den Böden der benachbarten Rinnenteile durch Einsatz von Befestigern festgelegt werden kann. Als Befestiger wird man typischerweise diejenigen Schrauben einsetzen, die ohnehin im Zusammenhang mit der Erstellung eines Kabeltragsystems verwendet werden.

Zusätzlich zu dem bereits vorbeschriebenen Anschluss des Einsatzes mittels seiner Kanalrandleiste an die der Scharnierstelle gegenüberliegenden Seitenholme der beiden Rinnenteile ist gemäß einer Weiterbildung vorgesehen, den Einsatz auch an der der Kanalrandleiste gegenüberliegenden Seite an dem diesseitigen Seitenholm des Kabelrinnensegmentes festzulegen. Dieses erfolgt zweckmäßigerweise benachbart zu einer Scharnierstelle. Für den Fall, dass zwei mit Abstand zueinander angeordnete Scharnierstellen vorgesehen sind, erfolgt diese zusätzliche Festlegung des Einsatzes zwischen den beiden Scharnierstellen. Zum Festlegen des Einsatzes benachbart zu einer Scharnierstelle wird gemäß einer Ausgestaltung ein Anschlusswinkel verwendet. Dieser ist angeformt an das Bodenteil des Einsatzes. Um eine Montage des Einsatzes in den durch die beiden Rinnenteile gebildeten Kanal, vor allem zum Zwecke einer Vormontage des Kabelrinnensegmentes zu vereinfachen, kann vorgesehen sein, im Bereich des Überganges zwischen dem Boden und dem Seitenholm benachbart zu einer Scharnierstelle eine Durchbrechung vorzusehen, durch die der Anschlusswinkel aus dem Kanalinneren herausgeführt ist bzw. herausgeführt werden kann. Dabei weist die Durchbrechung eine solche Länge auf, dass auch ein Teil des Bodenteils herausgeführt werden kann. Festgelegt ist der Einsatz mittels des Anschlusswinkels bei einer solchen Ausgestaltung mittels eines Befestigers an der Außenseite des Seitenholms. Ein Anschluss des Einsatzes auch an den Seitenholm des Kabelrinnensegmentes, der die zumindest eine Scharnierstelle trägt, wird als zusätzliche Anbindungsmöglichkeit angesehen, da die diesseitigen Seitenholme der Rinnenteile bereits durch die Scharnierstelle miteinander verbunden sind. Dieses ist bei den anderen Seitenholmen anders. Diese sind durch einen Spalt voneinander getrennt. Daher hat ein Anschluss der Kanalrandleiste an die Seitenholme der Rinnenteile gegenüber dem Anschluss des Einsatzes an dem die Scharnierstelle tragenden Seitenholm Vorrang.

Weitere Vorteile und Ausgestaltungen ergeben sich aus der nachfolgenden Beschreibung eines Ausführungsbeispiels unter Bezugnahme auf die beigefügten Figuren. Es zeigen:
- **Fig. 1:**: eine perspektivische Darstellung nach Art einer Explosionsdarstellung eines Kabelrinnensegmentes gemäß der Erfindung,
- **Fig. 2:**: das aus den in Figur 1 gezeigten Bestandteilen zusammengesetzte Kabelrinnensegment,
- **Fig. 3:**: das Kabelrinnensegment der Figur 2 in einer anderen perspektivischen Darstellung,
- **Fig. 4:**: eine vergrößerte Querschnittsdarstellung durch einen Abschnitt des Kabelrinnensegmentes der Figuren 2 und 3,
- **Fig. 5:**: das Kabelrinnensegment der vorstehenden Figuren in einer beispielhaften Einrichtung zum Ausbilden eines ersten Winkelsegmentes und
- **Fig. 6:**: das Kabelrinnensegment der vorstehenden Figuren in einer beispielhaften Einrichtung zum Ausbilden eines anderen Winkelsegmentes.

Ein Kabelrinnensegment 1 verfügt über einen durch zwei Seitenholme 2, 2.1 und einen Boden 3 gebildeten Kanal 4. Der Kanal 4 dient zur Aufnahme von Kabeln, Leitungen oder dergleichen. Das Kabelrinnensegment 1 wird mit anderen standardmäßigen Kabelrinnensegmenten zur Erstellung von Kabeltragsystemen verwendet.

Das Kabelrinnensegment 1 ist ein bezüglich der Geometrie seines Längsverlaufes variabel einrichtbares Kabelrinnensegment. Das Kabelrinnensegment 1 wird durch zwei Rinnenteile 5, 5.1 gebildet. Jedes Rinnenteil 5, 5.1 verfügt über einen Boden 3.1, welcher Boden 3.1 zusammen mit dem Boden 3.1 des anderen Rinnenteils den Boden 3 des Kabelrinnensegmentes 1 bildet. Eingefasst ist der Boden 3.1 jedes Rinnenteils 5, 5.1 durch zwei Seitenholmabschnitte 6, 6.1. Die beiden Rinnenteile 5, 5.1 sind identisch zueinander konzipiert, so dass bei beiden Rinnenteilen 5, 5.1 für gleiche Elemente gleiche Bezugszeichen verwendet werden.

Die beiden Rinnenteile 5, 5.1 sind im Bereich des Seitenholms 2 durch zwei Scharnierstellen 7, 7.1 miteinander verbunden. Bei dem dargestellten Ausführungsbeispiel werden die Scharnierstellen 7, 7.1 durch mehrere in vertikaler Richtung und somit in Querrichtung zum Längsverlauf des Seitenholmes 2 durchgreifende Öffnungen bereitgestellt. Die Öffnungen sind nach Art von Langlöchern ausgeführt. Fluchtend mit den Öffnungen der Scharnierstellen 7, 7.1 sind in das oberseitige Auge 8 des Seitenholms 2 zwei Einschnitte 9, 9.1 eingebracht. Die Einschnitte 9, 9.1 durchgreifen das Auge 8 sowie eine im oberen Bereich des Seitenholms 2 befindliche, nach innen vorspringende Verkröpfung. Im Übrigen befindet sich zwischen den beiden Rinnenteilen 5, 5.1 ein Spalt 10. Der Spalt 10 durchgreift den Seitenholm 2.1, wodurch die beiden, den Seitenholm 2.1 bildenden Seitenholmabschnitte 6.1 gebildet werden und den Boden 3 zur Ausbildung der beiden Böden 3.1 der beiden Rinnenteile 5, 5.1.

Aufgrund der durch die Öffnungen und die Einschnitte 9, 9.1 gebildeten Scharnierstellen 7, 7.1 innerhalb des Seitenholms 2 können die beiden Rinnenteile 5, 5.1 um die durch die Längserstreckung der Scharnierstellen 7, 7.1 gebildeten Schwenkachsen gegeneinander verstellt werden. Hierin liegt die Verstellbarkeit der Rinnenteile 5, 5.1 zueinander und die Winkeleinrichtbarkeit des Kabelrinnensegmentes 1 begründet.

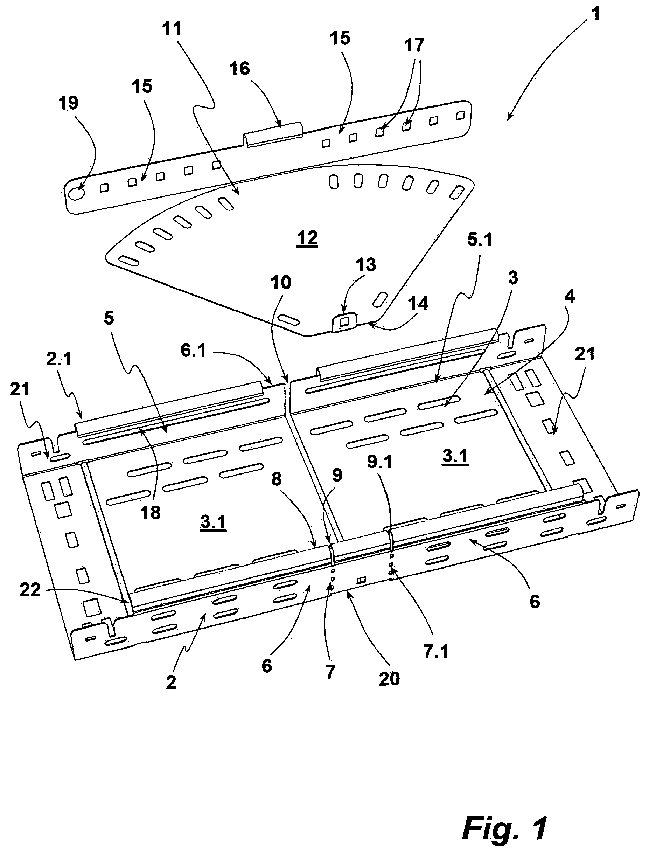

Das Kabelrinnensegment 1 verfügt neben den beiden Rinnenteilen 5, 5.1 über einen Einsatz 11. Der Einsatz 11 umfasst ein kreissegmentartig ausgebildetes Bodenteil 12, ein zum Anschließen des Einsatzes 11 an den Seitenholm 2 dienender Anschlusswinkel 13, angeformt an das Bodenteil 12 an der in Bezug auf die Geometrie des Bodenteils 12 radial innenliegende Kante 14, und über eine an der der Kante 14 gegenüberliegenden Kante angeformte Kanalrandleiste 15. Die Kanalrandleiste 15 ist im Bereich ihres mittleren Abschnittes an das Bodenteil 12 angeformt und befindet sich an der radial außenliegenden Seite des Bodenteils 12. Das Bodenteil 12 und die Kanalrandleiste 15 dienen zum Überbrücken des zwischen den beiden Rinnenteilen 5, 5.1 befindlichen Spaltes 10. Die Weite des Spaltes 10 ist abhängig von der Stellung der beiden Rinnenteile 5, 5.1 zueinander. In der in Figur 1 gezeigten längsaxial fluchtenden Anordnung der beiden Rinnenteile 5, 5.1 zueinander ist der Spalt 10 in seiner kleinsten Spaltweite gezeigt. Sind die beiden Rinnenteile 5, 5.1 gegeneinander zur Ausbildung eines Winkelstückes verstellt, vergrößert sich der Abstand der Seitenholmteile 6, 6.1 und somit der zwischen den Stößen der Rinnenteile 5, 5.1 befindliche Spalt. Das Bodenteil 12 dient zum Überbrücken des Spaltes 10 zwischen den beiden Böden 3, 3.1 der beiden Rinnenteile 5, 5.1. Die Kanalrandleiste 15 dient zum Überbrücken des Spaltes 10 zwischen den beiden Seitenholmteilen 6.1. Bei dem dargestellten Ausführungsbeispiel ist bei den Rinnenteilen 5, 5.1 im Bereich des Holmes 2.1 benachbart zu dem Spalt 10 jeweils ein Teil des oberseitigen Auges ausgespart. In diese Augenaussparung greift ein oberseitig in diesem Bereich an die Kanalrandleiste 15 angeformtes Augenstück 16 ein.

Der Längserstreckung der Kanalrandleiste 15 folgend sind in die beiden an das Augenstück 16 anschließenden Abschnitte quadratische Durchbrechungen 17 eingebracht. In die Seitenholmteile 6.1 ist jeweils ein der Längserstreckung folgendes Langloch 18 eingebracht. Die Durchbrechungen 17 fluchten mit dem Langloch 18 und dienen zum Festlegen der Kanalrandleiste 15 an der Innenseite der beiden Seitenholmabschnitte 6.1. Beispielhaft ist in den linken Abschnitt der Kanalrandleiste 15 eine Befestigungsschraube 19 mit einem an die Unterseite des Kopfes angeformten Vierkant eingesetzt. Der Vierkant greift drehmomentschlüssig in eine Durchbrechung 17 der Kanalrandleiste 15 ein.

Der Anschlusswinkel 13 dient zum Anschließen des Einsatzes 11 an den Seitenholm 2. Vorgesehen ist hierfür derjenige Abschnitt des Seitenholms 2, der sich zwischen den beiden Scharnierstellen 7, 7.1 befindet. Zu diesem Zweck befindet sich ein Abschnitt im Bereich des Überganges zwischen den Böden 3.1 und dem Seitenholm 2 bzw. den Seitenholmteilen 6 durch eine Einsetzöffnung 20. Durch diese Öffnung 20 kann der Anschlusswinkel 13 hindurchgeführt und außenseitig an dem Seitenholm 2 mittels eines Befestigers angeschlossen werden.

Die Böden 3.1 verfügen zur Begrenzung ihres endseitigen Verbindungsabschnittes 21 über eine quer verlaufende Sicke 22. Die Höhe der Sicke 22 ist etwas höher als die Materialstärke eines Kabelrinnensegmentes, welches mit seinem Verbindungsabschnitt mit dem Verbindungsabschnitt 21 des Kabelrinnensegmentes 1 überlappend eingesetzt wird. Somit dient die Sicke 22 zum einen einer Querversteifung und zum anderen zum Bereitstellen eines Kantenschutzes.

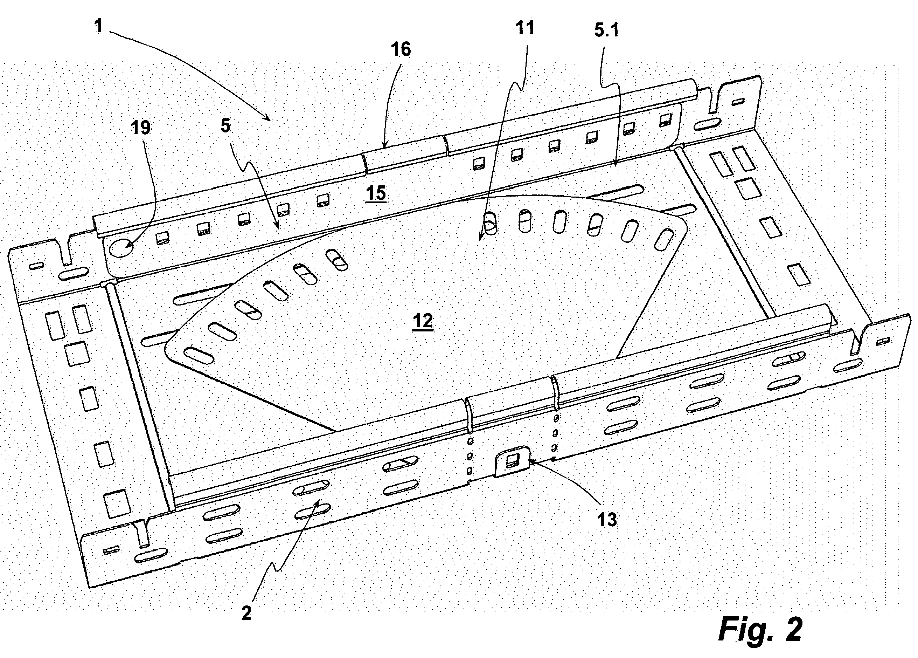

Das Kabelrinnensegment 1 ist in Figur 2 mit den zusammengesetzten Elementen gezeigt, wobei mit Ausnahme der Befestigungsschraube 19 weitere Befestigungsschrauben nicht gezeigt sind. Eine weitere Befestigungsschraube sitzt in dem rechten Ast der Kanalrandleiste 15. Noch eine weitere Befestigungsschraube dient zum Befestigen des Anschlusswinkels 13 an dem Seitenholm 2.

Der Abstand des Anschlusswinkels 13 von der Kanalrandleiste 15 ist dergestalt bemessen, dass in der in Figur 2 gezeigten montierten Stellung von Einsatz 11 und Rinnenteilen 5, 5.1 die zu der Innenseite des Seitenholms 2.1 bzw. den Seitenholmteilen 6.1 weisende Fläche der Kanalrandleiste 15 an dieser anliegt.

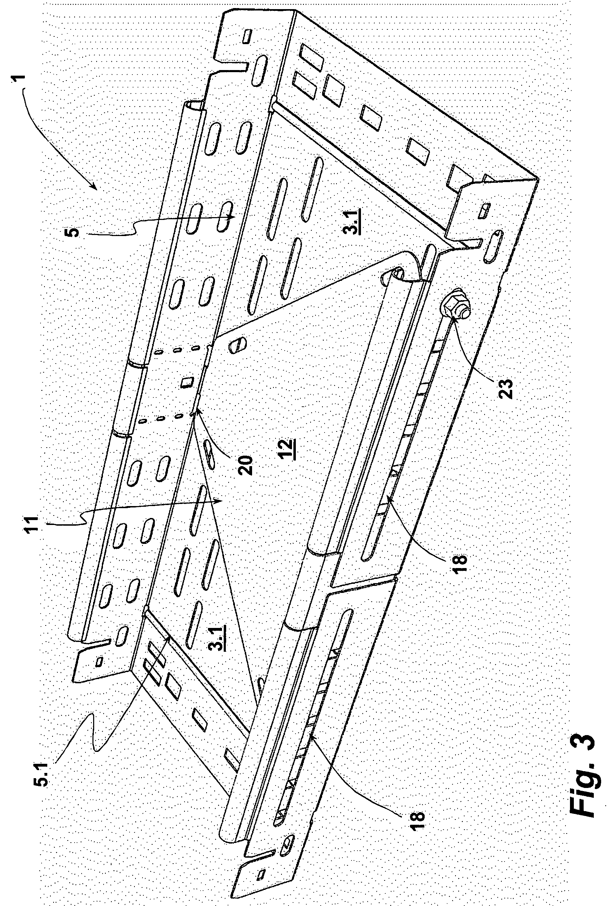

Figur 3 zeigt das Kabelrinnensegment 1 gegenüber der Darstellung der Figur 2 von seiner anderen Seite. Erkennbar ist, dass auf dem Gewindeabschnitt der Befestigungsschraube 19 eine Mutter 23 sitzt. Der in Richtung der Innenseite des Seitenholms 2 gerichtete Blickwinkel des Kabelrinnensegmentes 1 der Figur 3 zeigt zudem die Einsetzöffnung 20 im Bereich des Überganges des Bodens 3.1 in den Seitenholm 2.

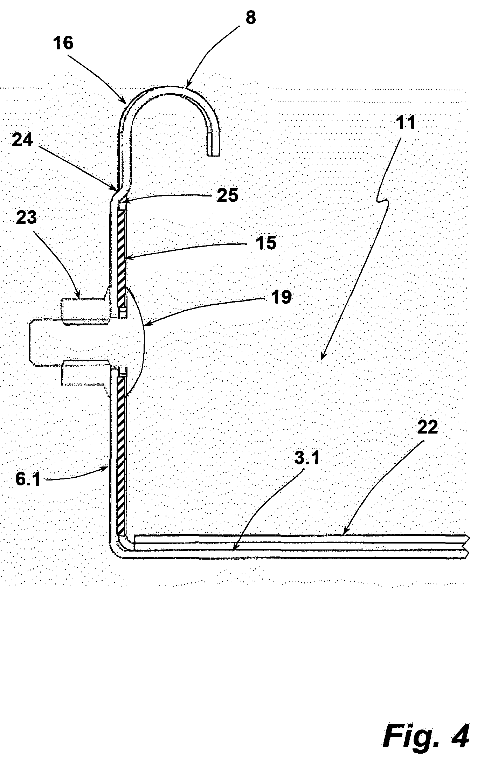

Bereits angesprochen worden ist, dass die Seitenholme 2, 2.1 eine unterhalb ihres Auges 8 angeordnete, nach innen vorspringende Verkröpfung aufweisen. Die vergrößerte Querschnittsdarstellung des Seitenholms 2.1 der Figur 4 zeigt die Verkröpfung 24 deutlicher. Durch die nach innen vorspringende Verkröpfung 24 ist zwischen dem Boden 3 bzw. 3.1 und der Verkröpfung 24 eine Kanalrandleistenaufnahme 25 geschaffen. Die Höhe dieser Kanalrandleistenaufnahme 25 entspricht der Höhe der Kanalrandleiste 15 vom Boden 3.1 eines Rinnenteils 5 bzw. 5.1. Da die Kanalrandleiste 15 an der Innenseite des Seitenholms 2.1 anliegt und in der Kanalrandleistenaufnahme 25 aufgenommen ist, erfährt die durch die Kanalrandleiste 15 bereitgestellte Verbindung zwischen den Seitenholmteilen 6.1 der beiden Rinnenteile 5, 5.1 einen zusätzlichen Knickschutz. In Figur 4 ist die Querschnittsfläche der Kanalrandleiste 15 zur Verdeutlichung schraffiert gezeigt.

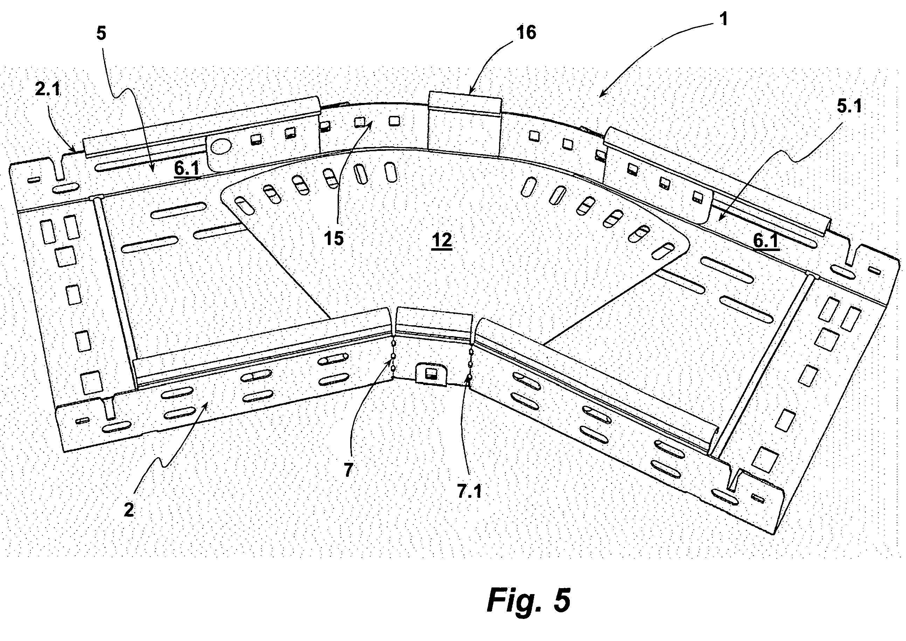

Figur 5 zeigt das Kabelrinnensegment 1, bei dem die beiden Rinnenteile 5, 5.1 um einen Winkel vom etwa 45° gegeneinander verstellt sind. Die beiden Rinnenteile 5, 5.1 sind um die beiden Scharnierstellen 7, 7.1 gegeneinander im Bereich des Seitenholms 2 verschwenkt. Zum Überbrücken des zwischen den Rinnenteilen 5, 5.1 gebildeten und in Richtung zum Seitenholm 2.1 größer werdenden Spaltes 10 dient das Bodenteil 12 des Einsatzes 11 zusammen mit der daran angeformten Kanalrandleiste 15.

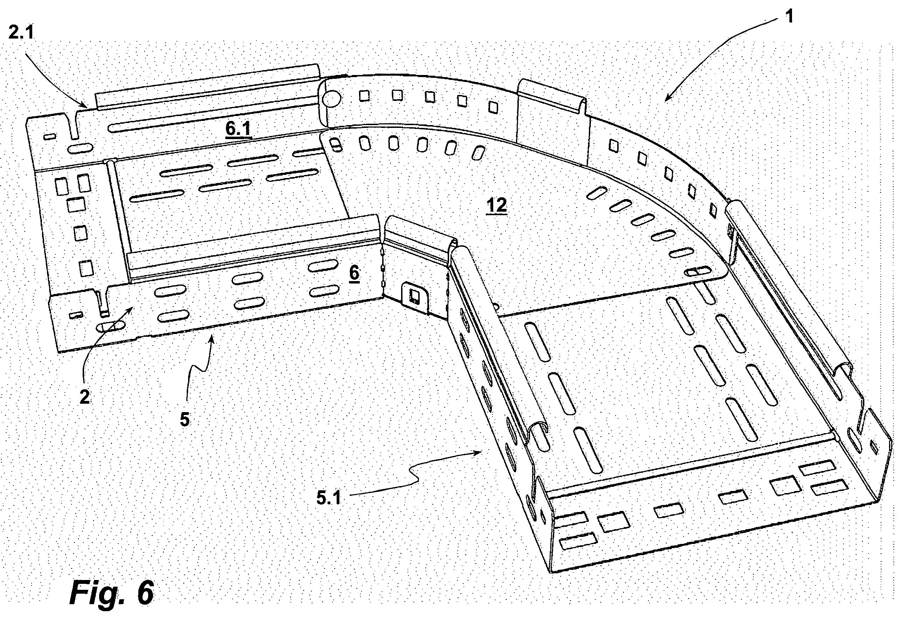

Figur 6 zeigt beispielhaft eine andere Stellung der beiden Rinnenteile 5, 5.1 zueinander. In dieser Stellung schließen die beiden Rinnenteile 5, 5.1 einen Winkel von etwa 90° ein.

Bei der Auslieferung der Kabelrinnensegmente 1 ist das Einsatzteil 11 vormontiert. Dies bedeutet, dass der Einsatz 11 an den Seitenholm 2 mittels eines Befestigers angeschlossen ist. Dieser wurde als Befestigungsschraube vorstehend beispielhaft angesprochen. Ebenfalls kann anstelle einer Schraube als Befestiger beispielsweise eine Clinchverbindung oder ein Niet eingesetzt werden. Ebenfalls ist die Kanalrandleiste 15 mit zumindest jeweils einem Befestiger an jedes Seitenholmteil 6.1 der beiden Rinnenteile 5, 5.1 angeschlossen. Typischerweise sind diese Befestiger im ausgelieferten Zustand des Kabelrinnensegmentes 1 nur lose angezogen, so dass vor Ort die beiden Rinneteile 5, 5.1, ohne zuvor einen Befestiger lösen zu müssen, gegeneinander eingerichtet werden können. Nach Einrichten der beiden Rinennteile 5, 5.1 zueinander werden sodann die die Kanalrandleiste 15 an den beiden Seitenholmteilen 6.1 anschließenden Befestiger angezogen. Wenn gewünscht, können zur weiteren Fixierung ebenfalls ein oder mehrere Befestiger zum Festlegen des Bodenteils 12 des Einsatzes 11 an den Böden 3.1 der beiden Rinnenteile 5, 5.1 eingesetzt werden.

Das Kabelrinnensegment 1 des in den Figuren dargestellten Ausführungsbeispiels ist hinsichtlich seiner Querschnittsdimensionierung ausgelegt, um in dem jeweiligen Verbindungsabschnitt 21 den unverkröpften Verbindungsabschnitt eines standardmäßigen Kabelrinnensegmentes aufzunehmen, dass heißt: eines Kabelrinnensegmentes, welches typischerweise nicht einrichtbar ist. Mithin sind die Verbindungsabschnitte 21 des Kabelrinnensegmentes 1 als Muffen ausgeführt. Insofern dient die Verkröpfung 24 in den beiden Seitenholmen 2, 2.1 des Kabelrinnensegmentes 1 auch dazu, dass das oberseitige Auge auf den beiden Seitenholmen 2, 2.1 mit den an das Kabelrinnensegment 1 angeschlossenen Kabelrinnensegmenten fluchtet. Dieses vereinfacht die Montage eines Deckels.

### Bezugszeichenliste

- 1: Kabelrinnensegment
- 2,2.1: Seitenholm
- 3,3.1: Boden
- 4: Kanal
- 5,5.1: Rinnenteil
- 6,6.1: Seitenholmabschnitt
- 7,7.1: Scharnierstelle
- 8: Auge
- 9, 9.1: Einschnitt
- 10: Spalt
- 11: Einsatz
- 12: Bodenteil
- 13: Anschlusswinkel
- 14: Kante
- 15: Kanalrandleiste
- 16: Augenstück
- 17: Durchbrechung
- 18: Langloch
- 19: Befestigungsschraube
- 20: Einsetzöffnung
- 21: Verbindungsabschnitt
- 22: Sicke
- 23: Mutter
- 24: Verkröpfung
- 25: Kanalrandleistenaufnahme

## Patentansprüche

1. Kabelrinnensegment mit einem durch zwei Seitenholme (2, 2.1) und einen die Seitenholme (2, 2.1) verbindenden Boden (3) gebildeten Kanal (4), welches Kabelrinnensegment (1) über zwei, an einem der beiden Seitenholme (2, 2.1) durch zumindest eine Scharnierstelle (7, 7.1) miteinander verbundene Rinnenteile (5, 5.1) verfügt, welche Rinnenteile (5, 5.1) um die durch eine solche Scharnierstelle (7, 7.1) bereitgestellte Schwenkachse gegeneinander verstellbar sind, **dadurch gekennzeichnet, dass** das Kabelrinnensegment (1) über einen daran benachbart zu einer Scharnierstelle (7, 7.1) angeschlossenen Einsatz (11) mit einem den zwischen den Böden (3.1) der Rinnenteile (5, 5.1) befindlichen Spalt (10) überbrückenden Bodenteil (12) verfügt, welches Bodenteil (12) an seinem der zumindest einen Scharnierstelle (7, 7.1) gegenüberliegenden Rand eine den zwischen den der zumindest einen Scharnierstelle (7, 7.1) gegenüberliegenden Seitenholmen (2, 2.1) der Rinnenteile (5, 5.1) befindlichen Spalt (10) überbrückende Kanalrandleiste (15) trägt.

2. Kabelrinnensegment nach Anspruch 1, **dadurch gekennzeichnet, dass** der Einsatz (11) über einen gegenüber dem Bodenteil (12) abgewinkelten Anschlusswinkel (13) verfügt, mit dem dieser benachbart zu einer Scharnierstelle (7, 7.1) eines Seitenholms (2) des Kabelrinnensegmentes (1) angeschlossen ist.

3. Kabelrinnensegment nach Anspruch 2, **dadurch gekennzeichnet, dass** dieses im Bereich des Übergangs vom Boden (3) in denjenigen Seitenholmabschnitt (2), an dem der Anschlusswinkel (13) des Einsatzes (11) festgelegt ist, eine Durchbrechung (20) aufweist, durch die der Anschlusswinkel (13) hindurchgreift.

4. Kabelrinnensegment nach einem der Ansprüche 1 bis 3, **dadurch gekennzeichnet, dass** das Bodenteil (12) des Einsatzes (11) in einer Draufsicht die Form eines Kreissegmentes aufweist und der Anschlusswinkel (13) bezüglich der Form des Bodenteils (12) radial innenseitig und die Kanalrandleiste (15) radial außenseitig jeweils im Bereich der Mitte des kreissegmentförmigen Bodenteiles (12) an dieses angeformt sind.

5. Kabelrinnensegment nach einem der Ansprüche 2 bis 4, **dadurch gekennzeichnet, dass** die beiden Rinnenteile (5, 5.1) über zwei, in Längserstreckung des Kabelrinnensegmentes (1) voneinander beabstandete Scharnierstellen (7, 7.1) miteinander verbunden sind und der Einsatz (11) mittels seines Anschlusswinkels (13) an den zwischen den beiden Scharnierstellen (7, 7.1) befindlichen Seitenholmabschnitt angeschlossen ist.

6. Kabelrinnensegment nach einem der Ansprüche 1 bis 5, **dadurch gekennzeichnet, dass** die Kanalrandleiste (15) des Einsatzes (11) an der Innenseite der Seitenholmteile (6.1) der Rinnenteile (5, 5.1) anliegt und die Seitenholmteile (6.1) zur Ausbildung einer Kanalrandleistenaufnahme (25) eine nach innen gerichtete Verkröpfung (24) aufweisen.

7. Kabelrinnensegment nach Anspruch 6, **dadurch gekennzeichnet, dass** auch der der Kanalrandleiste (15) gegenüberliegende Seitenholm (2) des Kabelrinnensegmentes (1) eine nach innen gerichtet Verkröpfung (24) aufweist.

8. Kabelrinnensegment nach einem der Ansprüche 1 bis 7, **dadurch gekennzeichnet, dass** die lichte Weite des Kabelrinnensegmentes (1) derart bemessen ist, dass in die in Längserstreckung offenen endseitigen Verbindungsabschnitte (21) der endseitige Verbindungsabschnitt eines standardmäßigen Kabelrinnensegmentes einsetzbar ist.

9. Kabelrinnensegment nach Anspruch 8 in seinem Rückbezug auf Anspruch 6 und 7, **dadurch gekennzeichnet, dass** die Sprungweite der nach innen gerichteten Verkröpfung (24) der Seitenholme (2, 2.1) ein solches Maß aufweist, das der obere Abschluss der Seitenholme (2, 2.1) des Kabelrinnensegmentes (1) mit dem jeweils benachbarten oberen Abschluss des Seitenholmes (2, 2.1) eines in den Endabschnitt eingesetzten Kabelrinnensegmentes entspricht.

10. Kabelrinnensegment nach einem der Ansprüche 1 bis 9, **dadurch gekennzeichnet, dass** die Kanalrandleiste (15) und der benachbarte Seitenholm (2.1) des Kabelrinnensegmentes (1) miteinander fluchtende Durchbrechungen (17) zum Festlegen der Kanalrandleiste (15) an dem benachbarten Seitenholm (2) mittels eines oder mehrer Befestiger (19) aufweisen.

11. Kabelrinnensegment nach einem der Ansprüche 1 bis 10, **dadurch gekennzeichnet, dass** das Bodenteil (12) des Einsatzes (11) und der Boden (3.1) der Rinnenteile (5, 5.1) miteinander fluchtende Durchbrechungen zum Festlegen des Bodenteils (12) des Einsatzes (11) an dem Boden (3.1) der Rinnenteile (5, 5.1) mittels eines oder mehrer Befestiger aufweisen.

## Claims

1. Cable channel segment, with a channel (4) formed by two side spars (2, 2.1) and a base (3) connecting the side spars (2, 2.1), said cable channel segment (1) being provided with two channel parts (5, 5.1) connected to one another at one of the two side spars (2, 2.1) by at least one hinge point (7, 7.1), said channel parts (5, 5.1) being adjustable in relation to one another by way of the pivot axis provided by such a hinge point (7, 7.1), **characterised in that** the cable channel segment (1) is provided with an insert element (11) adjacent thereto and connected to a hinge point (7, 7.1), with a base part (12), which bridges the gap (10) present between the bases (3.1) of the channel parts (5, 5.1), said base part (12) carrying at its edge opposite the at least one hinge point (7, 7.1) a channel edge strip (15), which bridges the gap (10) present between the side spars (2, 2.1) of the channel parts (5, 5.1), opposite the at least one hinge point (7, 7.1) .

2. Cable channel segment according to claim 1, **characterised in that** the insert element (1) is provided with a connection angle piece (13), which is angled in relation to the base part (12), to which this is connected adjacent to a hinge point (7, 7.1) of a side spar (2) of the cable channel segment (1).

3. Cable channel segment according to claim 2, **characterised in that** this comprises a passage aperture (20) in the area of the transition from the base (3) into that side spar section (2) to which the connection angle piece (13) of the insert element (11) is secured.

4. Cable channel segment according to any one of claims 1 to 3, **characterised in that** the base part (12) of the insert element (11), in a view from above, exhibits the shape of a segment of a circle, and the connection angle piece (13) is shaped in relation to the shape of the base part (12) radially on the inside, and channel edge strip (15) is shaped in relation to it radially on the outside, in each case in the area of the middle of the base part (12) in the shape of a segment of a circle.

5. Cable channel segment according to any one of claims 2 to 4, **characterised in that** the two channel parts (5, 5.1) are connected to one another by means of two hinge points (7, 7.1), spaced at a distance from one another in the longitudinal extension of the cable channel segment (1), and the insert element (11) is connected by means of its connection angle piece (13) to the side spar section located between the two hinge points (7, 7.1).

6. Cable channel segment according to any one of claims 1 to 5, **characterised in that** the channel edge strip (15) of the insert element (11) is in contact on the inner side of the side spar parts (6.1) of the channel parts (5, 5.1) and the side spar parts (6.1) exhibit an offset (24) directed inwards in order to form an accommodation mount (25) for the channel edge strips.

7. Cable channel segment according to claim 6, **characterised in that** the side spar (2) of the cable channel segment (1) opposite the channel edge strip (15) also comprises an offset (24) directed inwards.

8. Cable channel segment according to any one of claims 1 to 7, **characterised in that** the clear width of the cable channel segment (1) is dimensioned in such a way that the end-side connection section of a standard cable channel segment can be inserted into the end-side connection sections (21), open in the longitudinal extension.

9. Cable channel segment according to claim 8, in reference to claims 6 and 7, **characterised in that** the jump displacement of the offset (24), directed inwards, of the side spars (2, 2.1) comprises such a dimension that the upper termination of the side spars (2, 2.1) of the cable channel segment (1) corresponds to the adjacent upper termination in each case of the side spar (2, 2.1) of a cable channel segment inserted into the end section.

10. Cable channel segment according to any one of claims 1 to 9, **characterised in that** the channel edge strip (15) and the adjacent side spar (2.1) of the cable channel segment (1) comprise mutually flush passage apertures (17) for securing the channel edge strip (15) to the adjacent side spar (2) by means of one or more securing elements (19).

11. Cable channel segment according to any one of claims 1 to 10, **characterised in that** the base part (12) of the insert element (11) and the base (3.1) of the channel parts (5, 5.1) comprise mutually flush passage apertures for securing the base part (12) of the insert element (11) to the base (3.1) of the channel parts (5, 5.1) by means of one or more securing elements.

## Revendications

1. Segment de conduit de câble comportant un canal (4) formé par deux montants latéraux (2, 2.1) et un fond (3) reliant les deux montants latéraux (2, 2.1), lequel segment de conduit de câble (1) dispose de deux éléments de conduit (5, 5.1) raccordés l'un à l'autre sur l'un des deux montants (2, 2.1) par au moins une zone charnière (7, 7.1), lesquels éléments de conduit (5., 5.1) sont réglables l'un par rapport à l'autre sur l'axe de pivotement mis à disposition par une telle zone charnière (7, 7.1), **caractérisé en ce que** le segment de conduit de câble (1) dispose d'un insert (11) raccordé à proximité d'une zone charnière (7, 7.1) à celui-ci, avec un élément de fond (12) qui ponte la fente (10) qui se trouve entre les fonds (3.1) des éléments de conduit (5, 5.1), lequel élément de fond (12) supporte sur son bord opposé à l'au moins une zone charnière (7, 7.1), une baguette de bordure du canal (15) qui ponte la fente (10) qui se trouve entre les montants latéraux (2, 2.1) des éléments de conduit (5, 5.1) situés à l'opposé de l'au moins une zone charnière (7, 7.1).

2. Segment de conduit de câble selon la revendication 1, **caractérisé en ce que** l'insert (11) dispose d'un angle de raccordement (13) replié par rapport à la pièce de fond (12), grâce auquel il est raccordé à proximité d'une zone charnière (7, 7.1) d'un montant latéral (2) du segment de conduit de câble (1).

3. Segment de conduit de câble selon la revendication 2, **caractérisé en ce que** celui-ci présente, dans la zone de la transition entre le fond (3) et le tronçon de montant latéral (2), sur lequel est fixé l'angle de raccordement (13) de l'insert (11), une découpe (20) dans laquelle s'engage l'angle de raccordement (13).

4. Segment de conduit de câble selon l'une des revendications 1 à 3, **caractérisé en ce que** la pièce de fond (12) de l'insert (11) présente, dans une vue du dessus, la forme d'un segment circulaire et l'angle de raccordement (13), par rapport à la forme de la pièce de fond (12), est moulé sur cette dernière de façon radiale, sur le côté intérieur et la baguette de bordure du canal (15), de façon radiale, sur le côté extérieur, respectivement au niveau du centre de la pièce de fond (12) en forme de segment circulaire cercle.

5. Segment de conduit de câble selon l'une des revendications 2 à 4, **caractérisé en ce que** les deux éléments de conduit (5, 5.1) sont raccordés l'un à l'autre par deux zones charnières (7, 7.1) à distance l'une de l'autre dans le sens de l'étendue longitudinale du segment de conduit de câble (1) et l'insert (11) est raccordé par son angle de raccordement (13) au tronçon de montant latéral qui se trouve entre les deux zones charnières (7, 7.1).

6. Segment de conduit de câble selon l'une des revendications 1 à 5, **caractérisé en ce que** la baguette de bordure du canal (15) de l'insert (11) est en appui sur la face intérieure des éléments de montant latéral (6.1) des éléments de conduit (5, 5.1) et les éléments de montant latéral (6.1) présentent un recourbement (24) orienté vers l'intérieur afin de former un logement de baguette de bordure du canal (25).

7. Segment de conduit de câble selon la revendication 6, **caractérisé en ce que** le montant latéral (2) du segment de conduit de câble (1) situé à l'opposé de la baguette de bordure du canal (15) présente également un recourbement (24) orienté vers l'intérieur.

8. Segment de conduit de câble selon l'une des revendications 1 à 7, **caractérisé en ce que** la largeur intérieure du segment de conduit de câble (1) est dimensionnée de telle sorte que l'on peut engager un segment de conduit de câble de conception standard dans les tronçons de liaison (21) d'extrémité ouverts dans le sens longitudinal.

9. Segment de conduit de câble selon la revendication 8, avec sa référence aux revendications 6 et 7, **caractérisé en ce que** la largeur de la discontinuité du recourbement (24) orienté vers l'intérieur des montants latéraux (2, 2.1) présente des dimensions telles que l'extrémité supérieure des montants latéraux (2, 2.1) du segment de conduit de câble (1) correspond respectivement à l'extrémité supérieure du montant latéral (2, 2.1) voisin d'un segment de conduit de câble engagé dans le tronçon d'extrémité.

10. Segment de conduit de câble selon l'une des revendications 1 à 9, **caractérisé en ce que** la baguette de bordure du canal (15) et le montant latéral (2.1) voisin du segment de conduit de câble (1) présentent des découpes (17) alignées les unes avec les autres afin de fixer la baguette de bordure du canal (15) sur le montant latéral (2) voisin à l'aide d'un ou de plusieurs éléments de fixation (19).

11. Segment de conduit de câble selon l'une des revendications 1 à 10, **caractérisé en ce que** la pièce de fond (12) de l'insert (11) et le fond (3.1) des éléments de conduit (5, 5.1) présentent des découpes alignées les unes avec les autres afin de fixer la pièce de fond (12) de l'insert (11) au fond (3.1) des éléments de conduit (5, 5.1) à l'aide d'un ou de plusieurs éléments de fixation.
